Europäisches Patentamt

European Patent Office

Office européen des brevets

(19)

(11) Numéro de publication: **0 241 350 B1**

(12) **FASCICULE DE BREVET EUROPEEN**

(45) Date de publication du fascicule du brevet:
31.10.90

(51) Int. Cl.⁵: **F16J 15/02**, F16L 41/08

(21) Numéro de dépôt: **87400702.4**

(22) Date de dépôt: **31.03.87**

(54) Joint statique métallique et assemblage comportant un tel joint.

(30) Priorité: **01.04.86 FR 8604610**

(43) Date de publication de la demande:
**14.10.87 Bulletin 87/42**

(45) Mention de la délivrance du brevet:
**31.10.90 Bulletin 90/44**

(84) Etats contractants désignés:
**BE DE FR GB IT NL SE**

(56) Documents cités:
**FR-A- 1 356 218**
**FR-A- 1 537 146**
**FR-A- 1 563 153**
**US-A- 2 852 281**

(73) Titulaire: **SOCIETE EUROPEENNE DE PROPULSION,**
**24 rue Simon de Rothschild, F-92150 Suresnes(FR)**

(72) Inventeur: **Chevallier, Marc, 12 Les Jardins de Tilly,**
**Tilly 27510 Tourny(FR)**
Inventeur: **Froger, Guy, 43 Rue Claude Monet,**
**F-27200 Vernon(FR)**

(74) Mandataire: **Thévenet, Jean-Bruno et al, Cabinet BEAU**
**DE LOMENIE 55 rue d'Amsterdam, F-75008 Paris(FR)**

ACTORUM AG

## Description

La présente invention a pour objet un joint statique métallique à restitution élastique, ainsi que des assemblages par raccord vissé incorporant un tel joint.

L'invention concerne plus particulièrement un joint statique métallique comprenant une partie annulaire formant talon et des premier et second voiles raccordés latéralement au talon et s'étendant transversalement par rapport à l'axe du joint, le joint présentant, en demi-coupe axiale, la forme d'un V couché, les surfaces coniques des branches du V étant légèrement inclinées par rapport aux surfaces planes du talon, perpendiculaires à l'axe du joint, auxquelles elles sont rattachées, et les branches constituant les voiles présentant une élasticité telle que par flexion desdites surfaces coniques des branches du V, les extrémités de ces surfaces puissent assurer une première zone d'étanchéité.

On connaît divers types de joints statiques destinés à assurer une étanchéité dans des assemblages fixes. Les joints statiques peuvent ainsi être par exemple toriques, à quatre lobes, et être notamment métalliques, métalloplastiques ou en caoutchouc synthétique.

Les différents joints statiques connus répondent à certaines conditions de fonctionnement mais ne sont pas pleinement satisfaisants en ce qui concerne soit le coût de fabrication, soit les qualités mécaniques, soit les performances du point de vue notamment de la résistance à des conditions sévères de fonctionnement.

Les joints statiques du type élastomères sont relativement bon marché, mais possèdent une durée de vie relativement limitée.

Les joints statiques métalliques connus présentent de meilleures caractéristiques du point de vue des performances de la durée de vie, mais sont en générale plus coûteux à fabriquer.

On a déjà proposé de réaliser des joints statiques métalliques comportant des voiles rattachés à un talon et définissant un profil en Vé. De tels joints sont par exemple décrits dans les brevets français 1 356 218, 1 537 146 et 1 563 153. De tels joints n'ont cependant pas pu être utilisés de façon commode dans des conditions d'utilisation difficiles, par exemple sous haute pression ou en présence de vibrations importantes. Ceci provient en particulier du fait que les différents joints connus de ce type ne présentent qu'une zone unique d'étanchéité à l'extrémité des lèvres, le talon ne présentant qu'une fonction géométrique de positionnement du joint et ne pouvant pas être comprimé de façon significative. De plus, les joints connus de ce type présentent des concentrations de contraintes importantes au niveau des gorges ménagées entre le talon et les branches du Vé ou sur le talon lui-même, ce qui rend ces joints impropres à des utilisations dans des conditions sévères de fonctionnement où les efforts mécaniques sont importants.

L'invention vise à remédier aux inconvénients précités et à réaliser un joint statique qui à la fois soit relativement bon marché et présente d'excellentes qualités sur les plans de la résistance mécanique et de la résistance aux agressions dans des conditions sévères de température, de pression, de vibrations et d'agression chimique.

L'invention a encore pour but de réaliser un joint statique qui soit facile à fabriquer et à installer au sein d'un assemblage par raccord vissé.

L'invention a encore pour but de réaliser un joint statique qui puisse présenter un encombrement minimum et puisse être associé à d'autres types de joints classiques.

Ces buts sont atteints grâce à un joint statique métallique du type défini en tête de la description caractérisé en ce que le joint est réalisé en métal ou alliage métallique présentant une charge unitaire à la limite d'allongement rémanent Re supérieure ou égale à environ 600 MPa, en ce que les surfaces extérieures coniques des premier et second voiles sont raccordées aux surfaces extérieures planes du talon en définissant chacune un cône ayant un demi-angle au sommet compris entre 83° et 75° raccordé de façon douce et régulière à la surface extérieure plane correspondante du talon par des portions ou liaison et en ce que la partie annulaire formant talon est semi-rigide et légèrement flexible de manière que lors de la flexion desdites surfaces coniques des branches du V, les surfaces extérieures planes du talon se déforment pour assurer une deuxième zone d'étanchéité.

Selon un premier mode de réalisation dans lequel le joint statique présente un diamètre extérieur inférieur ou égal à environ 14 mm, le talon constitue une partie annulaire intérieure et les branches du V sont tournées vers l'extérieur.

Selon un autre mode de réalisation, dans lequel le joint statique présente un diamètre extérieur supérieur ou égal à environ 14 mm, le talon constitue une partie annulaire extérieure et les branches du V sont tournées vers l'axe du joint.

L'invention concerne encore un assemblage par raccord vissé, comprenant une pièce d'implantation munie d'un filetage interne, et une pièce de raccord composée d'une tête de raccord et d'une tige filetée coopérant avec ledit filetage interne, assemblage dans lequel la tête de raccord présente une surface inférieure plane, la pièce d'implantation comporte un lamage en regard de ladite surface inférieure plane de la tête de raccord et un joint statique métallique à restitution élastique tel que défini plus haut est interposé entre ladite surface inférieure plane et ledit lamage.

Selon une caractéristique supplémentaire, dans un tel assemblage par raccord vissé, des surfaces cylindriques délimitant entre elles un logement annulaire destiné à recevoir un joint torique en élastomère sont réalisées sur la pièce de raccord et la pièce d'implantation respectivement dans une zone située entre la tête de raccord et la tige filetée et dans une zone située entre le lamage et le filetage interne.

D'autres caractéristiques et avantages de l'invention ressortiront de la description suivante de modes particuliers de réalisation, en référence aux dessins annexés, sur lesquels:

— la figure 1 est une vue en demi-coupe axiale d'un premier mode de réalisation de joint statique conforme à l'invention,

- la figure 2 est une vue en demi-coupe axiale d'un second mode de réalisation de joint statique conforme à l'invention,

- les figures 3 et 4 représentent une vue schématique en coupe axiale d'un assemblage par raccord vissé incorporant des joints statiques correspondant respectivement aux modes de réalisation des figures 1 et 2,

- la figure 5 est une vue en coupe axiale d'un assemblage par raccord vissé, adapté pour incorporer aussi bien un joint statique métallique selon l'invention qu'un joint toroïdal élastomère, et

- la figure 6 est une vue en coupe axiale d'un assemblage par raccord vissé, adapté pour incorporer à la fois un joint statique métallique selon l'invention et un joint toroïdal élastomère.

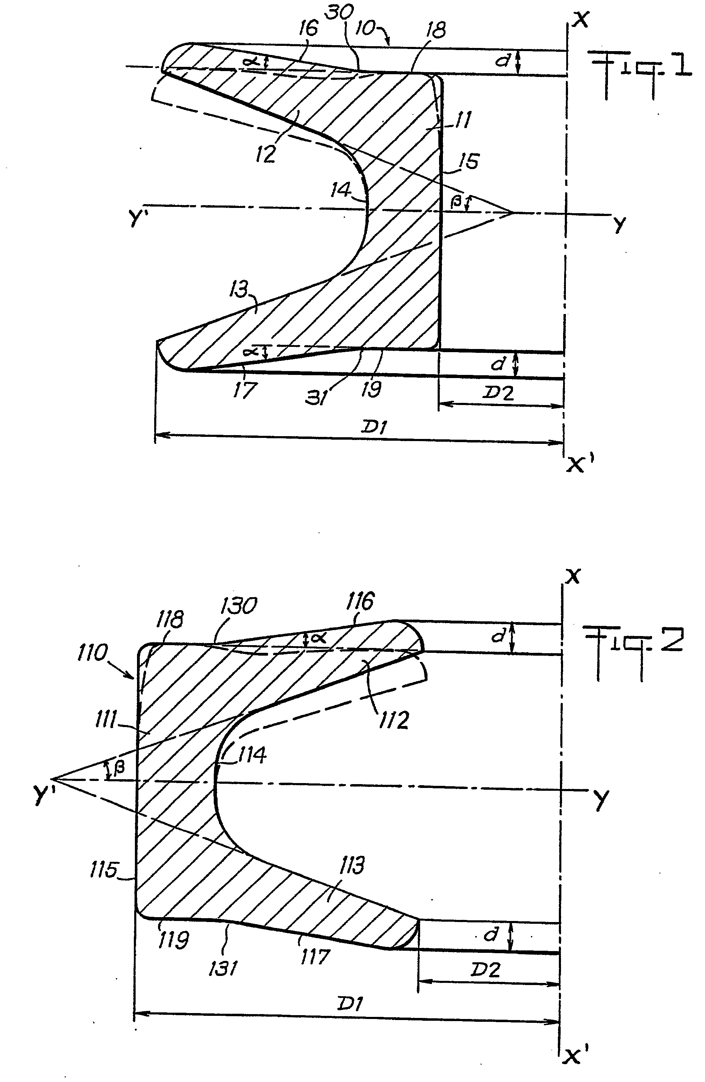

La figure 1 montre un premier exemple de joint statique métallique 10 conforme à l'invention, qui présente une symétrie de révolution autour de son axe X X' et comprend une partie annulaire semi-rigide 11 définissant un alésage 15 de diamètre D2 à laquelle sont raccordés des premier et second voiles 12, 13 qui s'étendent vers l'extérieur par rapport à la partie annulaire 11. Vu en demi-coupe axiale, le joint métallique 10 présente la forme d'un V couché avec un talon défini par la partie annulaire semi-rigide 11 et des ailes ou branches définies par les premier et second voiles 12, 13.

Les surfaces extérieures coniques 16, 17 des branches 12, 13 du V sont légèrement inclinées vers l'extérieur, d'un angle α pouvant être de l'ordre de 7 à 15° et de préférence voisin de 10°, par rapport aux surfaces frontales extérieures planes 18, 19 du talon 11 qui sont perpendiculaires à l'axe X'X du joint 10. Les branches 12, 13 du V présentent une épaisseur qui diminue régulièrement depuis leur zone de raccordement au talon 11 jusqu'à leur extrémité libre, qui est arrondie. L'inclinaison des faces intérieures des branches 12, 13 par rapport à un plan de symétrie Y'Y perpendiculaire à l'axe X'X du joint peut ainsi correspondre à un angle β supérieur à l'angle α et voisin par exemple de 20°. Les faces intérieures des branches 12, 13 sont raccordées au talon 11 par une partie courbe concave 14 à rayon relativement grand définissent un U dont les branches seraient divergentes.

Les surfaces extérieures 16, 17 des branches 12, 13 du V sont elles-mêmes raccordées aux surfaces frontales 18, 19 du talon 11 de façon douce et régulière, par des surfaces concaves 30, 31 à grand rayon de courbure. De la sorte, le joint ne comporte aucune gorge susceptible de permetre une concentration de contraintes.

En position de repos, chacun des voiles 12, 13 du joint 10 forme une couronne dont le rebord extérieur se projette à une distance d̲ par rapport au niveau de la face frontale correspondante 18, 19 du talon 11 du joint. Lorsque le joint 10 est en service, les voiles élastiques 12, 13 et le talon semi-rigide 11 fléchissent selon un profil permettant d'assurer les contacts d'étanchéité d'une part aux extrémités extérieures des faces 16, 17 et d'autre part, sur les faces 18, 19 du talon. Le profil du joint en service est représenté en pointillé sur la figure 1. La présence de deux zones d'étanchéité grâce à la légère flexion du talon 11 qui s'ajoute à la flexion des voiles 12, 13 constitue une caractéristique essentielle de la présente invention qui augmente les performances et garantit la sécurité de fonctionnement du joint même en cas de vibrations de très haut niveau.

Le joint 10 est entièrement métallique, mais différents revêtements par exemple en PTFE ou en argent peuvent être utilisés pour faciliter son montage sous raccord vissé sans qu'il soit nécessaire d'interposer des rondelles. Il est possible de choisir tous les métaux ou alliages ayant de bonnes caractéristiques métalliques, avec notamment une charge unitaire à la limite d'allongement rémanent Re supérieure ou égale à environ 600 MPa. Pour des utilisations dans des conditions sévères de température ou chimique, on peut utiliser par exemple un acier fortement allié tel que le Z6 NCT 25-15 ou un alliage tel que celui connu sous la dénomination "Inconel" et comprenant essentiellement 50 % de nickel, 19% de chrome et 19% de fer.

La configuration du joint 10, qui présente un talon interne 11 et des voiles 12, 13 définissent un V couché dont l'ouverture est tournée vers l'extérieur, est plus particulièrement adaptée à des applications nécessitant des dimensions relativement restreintes, et doit de préférence être choisie pour réaliser des joints dont le diamètre D1 est inférieur à environ 14 mm.

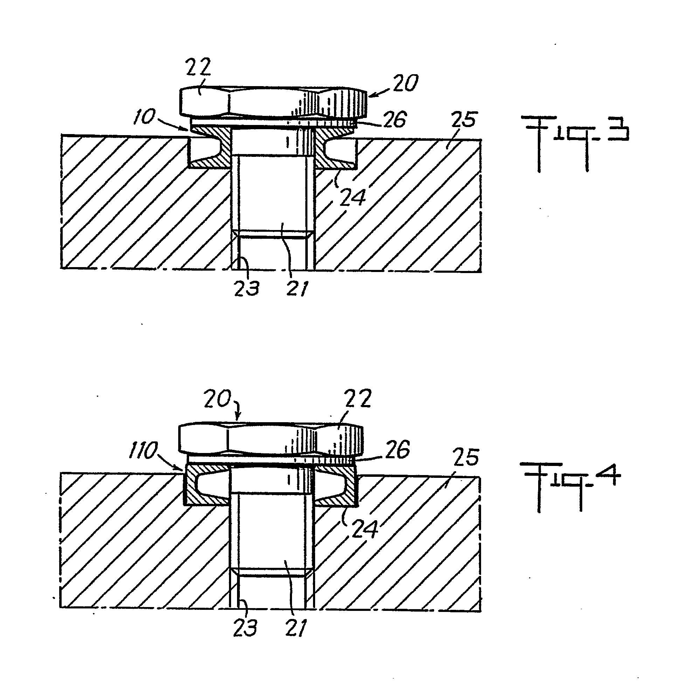

Pour des joints 110 dont le diamètre D1 doit être supérieur à environ 14 mm, on adopte de préférence la configuration de la figure 2. Le joint 110 de la figure 2 présente une constitution semblable à celle du joint 10 de la figure 1, mais le talon annulaire semi-rigide 111 est disposé à l'extérieur et les voiles flexibles 112, 113 s'étendent vers l'intérieur par rapport au talon annulaire semi-rigide 111. Le talon annulaire semi-rigide 111 présente ainsi des faces frontales planes 118, 119 perpendiculaires à l'axe XX' du joint et une surface cylindrique extérieure 115 ayant pour axe, l'axe X'X et définissant le diamètre extérieur D1 du joint. Le diamètre interne D2 du joint 110 est défini par les rebords internes des voiles 112, 113.

Comme dans le cas de la figure 1, le joint métallique 110 présente, vu en demi-coupe axiale, la forme d'un V couché, mais les ailes ou branches définies par les premier et second voiles 112, 113 sont dirigées vers l'axe X'X du joint. Les surfaces extérieures coniques 116, 117 des branches 112, 113 du V de la figure 2 sont légèrement inclinées vers l'extérieur d'un angle α comme dans le cas de la figure 1, pour se déporter vers l'extérieur d'une distance d̲ par rapport aux faces frontales 118, 119 du talon semi-rigide 111 lorsque le joint est à l'état de repos. Comme pour le cas du mode de réalisation de la figure 1, les surfaces extérieures 116, 117 des branches 112, 113 sont raccordées aux surfaces frontales 118, 119 du talon par des surfaces concaves 130, 131 à grand rayon de courbure. L'inclinaison et la forme des branches 112, 113 peuvent être tout à fait semblables à celles des branches 12, 13 du joint 10 de la figure 1 et les surfaces internes des branches 112, 113 peuvent ainsi être raccordées au talon 111 par une partie courbe concave 114 à rayon relativement grand.

Lorsque le joint 110 est en service, les voiles élastiques 112, 113 et le talon 111 fléchissent selon un profil permettant d'assurer les contacts d'étanchéité en extrémités extérieures des faces 116, 117 et sur les faces frontales 118, 119 de l'anneau semi-rigide extérieur 111. Le profil du joint en service est représenté en pointillé sur la figure 2.

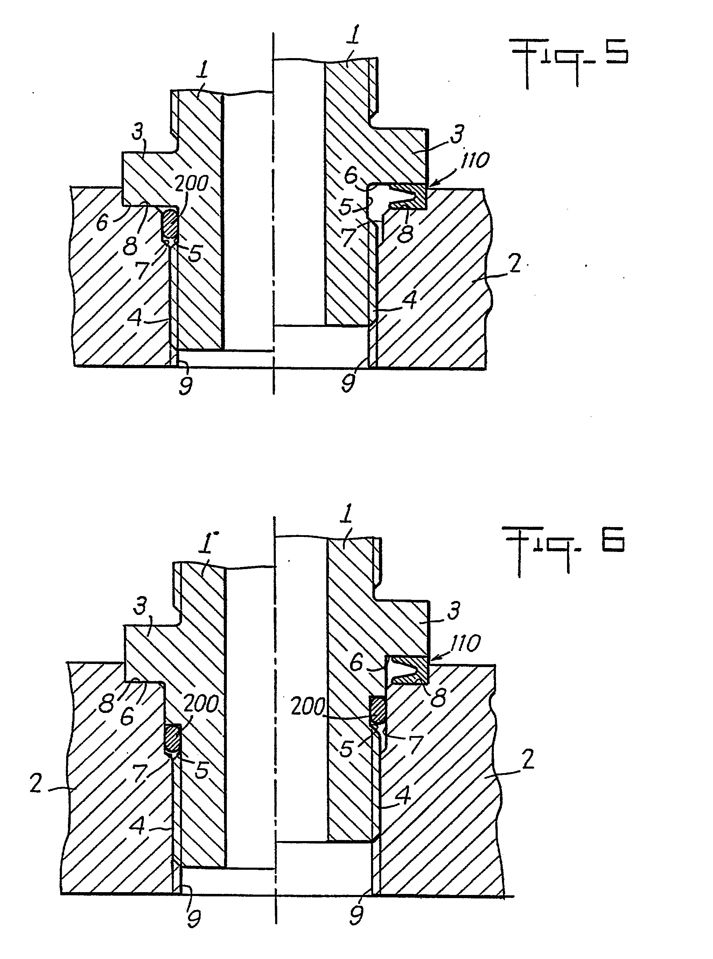

Les joints 10, 110 selon l'invention permettent des montages sous raccords vissés (figures 3 et 4). Le joint 10, 110 peut être monté avec ou sans lamage, seul l'état de surface des portées en contact avec le joint jouant un rôle. La raideur du joint 10, 110 est telle qu'au montage les voiles du joint peuvent être suffisamment fléchis pour que le raccord vienne en contact avec le talon du joint qui assure alors la continuité mécanique entre le raccord et le corps sur lequel est implanté le racord.

Les figures 3 et 4 concernent deux montages de joints sous raccord vissé, dans lesquels le raccord 20 comprend une tête 22 avec une face inférieure plane 26 venant porter sur le joint 10 ou 110, et une partie cylindrique filetée 21 qui coopère avec le filetage 23 d'un orifice formé dans le corps 25 dans lequel est implanté le raccord 20. Le joint 10 ou 110 est disposé sur un lamage 24 réalisé dans le corps 25. La figure 3 montre l'utilisation d'un joint 10 correspondant à la configuration de la figure 1 tandis que la figure 4 montre l'utilisation d'un joint 110 correspondant à la configuration de la figure 2. On voit que le mode de montage sous raccord est tout à fait semblable pour les joints 10 et 110.

Les figures 5 et 6 montrent chacune un assemblage par racord vissé permettant la mise en place, pour un même raccord 1 et une même pièce d'implantation 2, soit d'un joint torique élastomère classique 200, soit d'un joint métallique 110 selon l'invention présentant une section en forme de V.

Les figures 5 et 6 représentent chacune deux demi-vues en coupe axiale de l'assemblage, la demi-vue de gauche montrant la mise en oeuvre d'un joint torique et la demi-vue de droite montrant la mise en oeuvre d'un joint métallique avec (type de la figure 2) ou sans (type de la figure 1) joint torique.

Dans chaque cas, le raccord 1 possède deux surfaces permettant de recevoir deux types de joints :
- une surface cylindrique 5 qui permet le maintien d'un joint torique 200 en élastomère,
- une surface plane 6 qui est formée sur une tête de raccord 3 perpendiculairement à l'axe du raccord et permet le serrage du joint métallique 110.

Dans le cas de l'assemblage de la figure 5, il est possible de mettre en place soit le joint élastomère 200, soit le joint métallique 110 selon le besoin.

Dans le cas de l'assemblage de la figure 6, il est possible de mettre en place simultanément les deux joints 110, 200 lorsque la redondance est nécessaire. Ce deuxième type d'assemblage est un peu plus encombrant, et nécessite une longueur de raccord 1 et une profondeur d'implantation (surface 7) plus grandes. Il peut cependant être considéré comme universel puisqu'il permet de monter, en fonction du besoin, soit un joint élastomère seul, soit un joint métallique seul, ou encore à la fois un joint métallique et un joint élastomère et ceci sans rien modifier ni sur l'implantation ni sur le raccord.

Sur les figures 5 et 6, les références 4 et 9 désignent les filetages formés respectivement sur le raccord 1 et sur la pièce d'implantation 2. Les matériaux sont fonction des besoins, mais le raccord 1 est avantageusement en acier inoxydable.

Le joint métallique 10 ou 110 selon l'invention peut ainsi être utilisé avec des montages à raccords que l'on peut considérer comme universels.

Le joint métallique statique 10 ou 110 selon l'invention peut être utilisé dans des gammes de température, de vibrations et de pression trés vastes, qui dépendent en fait du matériau utilisé et du dimensionnement du joint. Compte tenu de sa forme, c'est-à-dire en particulier grâce à la présence de surfaces de raccordement concaves à grand rayon de courbure entre les voiles et le talon, et à l'absence de zones de concentration de contraintes, un tel joint peut ainsi résister à des hautes pressions par exemple supérieures à 50 MPa, ne pas être endommagé par des températures susceptibles d'aller par exemple de - 270°C à + 800°C, et supporter des ambiances vibratoires de très haut niveau par exemple de 40 g efficace.

Si le matériau utilisé pour le joint 10 ou 110 est du type acier inoxydable, le joint est à même de résister à toutes les ambiances chimiques courantes. On notera qu'il est bien adapté pour effectuer des étanchéités avec des fluides de grande diffusivité comme l'hélium ou l'hydrogène.

Les joints 10, 110 peuvent présenter un encombrement très faible dans les sens axial et radial, les dimensions minimales pouvant être de l'ordre de 2 × 2 mm. Ceci permet des montages de masse et d'encombrement très réduits.

De plus, compte tenu de sa forme très simple, le joint 10 ou 110 selon l'invention est adapté à une fabrication au tour à commande numérique. Ceci permet d'obtenir un prix très compétitif qui n'est pas supérieur à celui d'un joint élastomère de bonne qualité et se situe très en dessous du prix des joints métalliques de qualité connus ne présentant pas la forme spécifique proposée dans le cadre de la présente invention.

**Revendications**

1. Joint statique métallique comprenant une partie annulaire (11; 111) formant talon et des premier et second voiles (12, 13; 112, 113) raccordés latéralement su talon (11, 111) et s'étendant transversalement par rapport à l'axe du joint, le joint présentant, en demi-coupe axiale, la forme d'un V couché, les surfaces coniques (16, 17; 116, 117) des branches (12, 13; 112, 113) du V étant légèrement inclinées par rapport aux surfaces planes (18, 19; 118, 119) du talon (11; 111) perpendiculaires à l'axe du joint, auxquelles elles sont rattachées, et les branches (12, 13; 112, 113) du V constituant les voiles présentant une élasticité telle que par flexion desdites surfaces coniques (16, 17; 116, 117) des branches du V, les extrémités de ces surfaces puissent assurer une première zone d'étanchéité, caractérisé en ce que le joint est réalisé en métal ou alliage métallique présentant une charge unitaire à la limite d'allongement rémanent Re supérieure ou égale à environ 600 MPa, en ce que les surfaces extérieures coniques (16, 17; 116, 117) des premier et second voiles (12, 13; 112, 113) sont raccordés aux surfaces extérieures planes (18, 19; 118, 119) du talon en définissant chacune un cône ayant un demi-angle au sommet compris entre 83° et 75° raccordé de façon douce et régulière à la surface frontale extérieure plane correspondante (18, 19; 118, 119) du talon (11; 111) par des portions de liaison (30, 31, 14; 130, 131, 114), et en ce que la partie annulaire (11; 111) formant talon est semi-rigide et légèrement flexible de manière que lors de la flexion desdites surfaces coniques (16, 17; 116, 117) des branches du V, les surfaces extérieures planes (18, 19; 118, 119) du talon se déforment pour assurer une deuxième zone d'étanchéité.

2. Joint statique selon la revendication 1, caractérisé en ce qu'il présente un diamètre extérieur inférieur ou égal à environ 14 mm, en ce que le talon (11) constitue une partie annulaire intérieure et en ce que les branches (12, 13) du V sont tournées vers l'extérieur.

3. Joint statique selon la revendication 1, caractérisé en ce qu'il présente un diamètre extérieur supérieur ou égal à environ 14 mm, en ce que le talon (111) constitue une partie annulaire extérieure et en ce que les branches (112, 113) du V sont tournées vers l'axe du joint.

4. Joint statique selon l'une quelconque des revendications 1 à 3, caractérisé en ce qu'il est recouvert d'une mince couche de revêtement pour le montage du joint sous raccord vissé sans interposition de rondelle.

5. Assemblage par raccord vissé, comprenant une pièce d'implantation (25; 2) munie d'un filetage interne (23; 9) et une pièce de raccord (20; 1) composée d'une tête de raccord (22; 3) et d'une tige filetée (21; 4) coopérant avec ledit filetage interne (23; 9), caractérisé en ce que la tête de raccord (22; 3) présente une surface inférieure plane (26; 6), en ce que la pièce d'implantation (25; 2) comporte un lamage (24; 8) en regard de ladite surface inférieure plane (26; 6) de la tête de raccord (22; 3) et en ce qu'un joint métallique (10; 110) selon l'une quelconque des revendications 1 à 4, est interposé entre ladite surface inférieure plane (26; 6) et ledit lamage (24; 8).

6. Assemblage par raccord vissé selon la revendication 5, caractérisé en ce que des surfaces cylindriques (5, 7) délimitant entre elles un logement annulaire destiné à recevoir un joint torique (200) en élastomère sont réalisées sur la pièce de raccord (1) et la pièce d'implantation (2) respectivement dans une zone située entre la tête de raccord (3) et la tige filetée (4) et dans une zone située entre le lamage (8) et le filetage interne (9).

**Patentansprüche**

1. Statische Metalldichtung, die einen ringförmigen Bereich (11; 111), der einen Absatz oder ein hinteres Ende bildet, und erste und zweite Flügel (12, 13; 112, 113) aufweist, die seitlich an dem hinteren Ende (11, 111) angesetzt sind und sich quer bezüglich der Achse der Dichtung erstrecken, wobei die Dichtung in axialem Halbschnitt die Form eines umgelegten V aufweist, wobei die konischen Oberflächen (16, 17; 116, 117) der Arme (12, 13; 112, 113) des V leicht geneigt sind bezüglich der ebenen Oberflächen (18, 19; 118, 119) des hinteren Endes (11, 111) senkrecht zur Achse der Dichtung, zu denen sie angebunden sind, und die Arme (12, 13; 112, 113) des V die Flügel bilden, die eine derartige Elastizität aufweisen, daß durch Biegen der konischen Flächen (16, 17; 116, 117) der Arme des V die Enden dieser Oberflächen eine erste Dichtungszone sicherstellen können, dadurch gekennzeichnet, daß die Dichtung aus einem Metall oder einer Metallegierung besteht, das eine Einheitslast bei der remanenten Dehnungsgrenze Re aufweist, die größer oder gleich von ungefähr 600 MPa ist, daß die konischen Außenflächen (16, 17; 116, 117) der ersten und zweiten Flügel (12, 13; 112, 113) auf die ebenen Außenflächen (18, 19; 118, 119) des hinteren Endes aufgesetzt sind, wobei sie jeweils einen Konus definieren, der einen halben Winkel an der Spitze zwischen 83° und 75° definieren, der auf weiche und regelmäßige Weise mit der vorderen äußeren ebenen entsprechenden Fläche (18, 19; 118, 119) des hinteren Endes (11, 111) durch Verbindungsbereiche (30, 31, 14; 130, 131, 114) verbunden ist, und daß der ringförmige Bereich (11, 111), der das hintere Ende bildet, halbsteif und leicht biegsam derart ist, daß bei der Biegung der genannten konischen Flächen (16, 17, 116, 117) der Arme des V, die ebenen Außenflächen (18, 19; 118, 119) des hinteren Endes sich verformen, um eine zweite Dichtungszone sicherzustellen.

2. Statische Dichtung nach Anspruch 1, dadurch gekennzeichnet, daß sie einen Außendurchmesser aufweist, der kleiner oder gleich ungefähr 14 mm ist, daß das hintere Ende (11) einen ringförmigen Innenbereich bildet und daß die Arme (12, 13) des V nach außen gerichtet sind.

3. Statische Dichtung nach Anspruch 1, dadurch gekennzeichnet, daß sie einen Außendurchmesser aufweist, der größer oder gleich ungefähr 14 mm ist, daß das hintere Ende (111) einen ringförmigen Außenbereich bildet und daß die Arme (112, 113) des V zur Achse der Dichtung gedreht sind.

4. Statische Dichtung nach einem der Ansprüche 1 bis 3, dadurch gekennzeichnet, daß sie mit einer dünnen Schicht eines Überzugs für das Montieren der Dichtung in Schraubverbindung ohne Zwischenanordnung von einem Ring überdeckt sind.

5. Schraubverbindung, die ein Einsatzstück (25; 2), das ein Innengewinde (23; 9) aufweist und ein Verbindungsteil (20; 1) aufweist, das aus einem Verbindungskopf (22; 3) und einer Gewindespindel (21; 4) gebildet ist, die mit dem Innengewinde (23; 9) zusammenwirkt, dadurch gekennzeichnet, daß der Verbindungskopf (22; 3) eine untere ebene Oberfläche (26; 6) aufweist, daß das Einsatzstück (25; 2) eine Senkung (24; 8) gegenüber der ebenen unteren Seite (26; 6) des Verbindungskopfes (22; 3) aufweist, und daß eine metallische Dichtung (10; 110) nach einem der Ansprüche 1 bis 4 zwischen die untere ebene Fläche (26; 6) und die Senkung (24; 8) gesetzt ist.

6. Schraubverbindung nach Anspruch 5, dadurch gekennzeichnet, daß die zylindrischen Flächen (5, 7) untereinander eine ringförmige Aufnahme begrenzen, die dazu bestimmt ist, eine torischen Dichtung (200) aus Elastomer aufzunehmen, auf dem Verbindungsstück (1) bzw. dem Einsatzstück (2) in einer Zone gebildet sind, die zwischen dem Verbindungskopf (3) und der Gewindespindel (4) und in einer Zone, die zwischen der Senkung (8) und dem Innengewinde (9) ist, angeordnet sind.

**Claims**

1. Static metallic seal comprising an annular part (11; 111) forming bead and first and second wings (12, 13; 112; 113) connected laterally to the bead (11, 111) and extending transversely with respect to the seal axis, said seal having in axial half-section, the shape of a V lying on its side, the conical surfaces (16, 17; 116, 117) of the branches (12, 13; 112, 113) of the V being slightly inclined with respect to the planar surfaces (18, 19; 118, 119) of the bead (11; 111) perpendicular to the axis of the seal, to which they are attached, and the branches (12, 13; 112, 113) of the V constituting the wings having an elasticity such that by bending said tapered surfaces (16, 17; 116, 117) of the branches of the V, the end of said surfaces can ensure a first sealing zone, characterized in that the seal is produced in metal or metal alloys having a unitary load with the limit of remanent elongation Re greater than or equal to about 600 MPa, in that the tapered external surfaces (16, 17; 116, 117) of the first and second wings (12, 13; 112, 113) are connected to the planar outer surfaces (18, 19; 118, 119) of the bead, each one defining a cone having a half top angle ranging between 83° and 75° connected in gradual and regular manner to the corresponding outer front surface (18, 19; 119, 119) of the bead (11; 111) by connecting portions (30, 31, 14; 130, 131, 114), and in that the annular part (11; 111) forming bead is semi-rigid and slightly flexible so that when said tapered surfaces (16, 17; 116, 117) of the branches of the V are bent, the planar outer surfaces (18, 19; 118, 119) of the bead are deformed to ensure a second sealing zone.

2. Static seal according to claim 1, characterized in that it has an outer diameter less than or equal to about 14 mm, in that the bead (11) constitutes an inner annular part and in that the branches (12, 13) of the V are pointed towards the outside.

3. Static seal according to claim 1, characterized in that it has an outer diameter higher than or equal to about 14 mm, in that the bead (111) constitutes an outer annular part and in that the branches (112, 113) of the V are pointed towards the axis of the seal.

4. Static seal according to any one of claims 1 to 3, characterized in that it is coated with a thin layer of coating for mounting the seal under screwed connection without interposition of a washer.

5. Assembly by screwed connection comprising an implantation piece (25; 2) provided with an inner thread (23; 9), and a connecting piece (20; 1) composed of a connecting head (22; 3) and a threaded rod (21; 4) cooperating with said inner thread (23; 9), characterized in that the connecting head (22; 3) has a planar lower surface (26; 6), in that the implantation piece (25; 2) has a countersink (24; 8) opposite said planar lower surface (26; 6) of the connecting head (22; 3) and in that a static seal (10; 110) according to any one of claims 1 to 4, is interposed between said planar lower surface (26; 6) and said countersink (24; 8).

6. Assembly by screwed connection according to claim 5, characterized in that cylindrical surface (5, 7) defining therebetween an annular housing for receiving an O-ring (200) made of elastomer, are formed on the connecting piece (1) and the implantation piece (2) respectively in a region located between the connecting head (3) and the threaded rod (4) and in a region located bettween the countersink (8) and the inner thread (9).

EP 0 241 350 B1

Fig.1

Fig.2

Fig. 3

Fig. 4

Fig-5

Fig- 6